Europäisches Patentamt

European Patent Office

Office européen des brevets

(11) Veröffentlichungsnummer: **0 276 261 B1**

(12) **EUROPÄISCHE PATENTSCHRIFT**

(45) Veröffentlichungstag der Patentschrift:
06.03.91 Patentblatt 91/10

(21) Anmeldenummer: 87904802.3

(22) Anmeldetag: 04.08.87

(86) Internationale Anmeldenummer:
PCT/AT87/00046

(87) Internationale Veröffentlichungsnummer:
WO 88/00921 11.02.88 Gazette 88/04

(51) Int. Cl.⁵: **B65H 31/30, B65H 33/08**

(54) **VORRICHTUNG ZUM STAPELN VON GEFALZTEN DRUCKPRODUKTEN.**

(30) Priorität: 06.08.86 AT 2125/86

(43) Veröffentlichungstag der Anmeldung:
03.08.88 Patentblatt 88/31

(45) Bekanntmachung des Hinweises auf die
Patenterteilung:
06.03.91 Patentblatt 91/10

(84) Benannte Vertragsstaaten:
AT BE CH DE FR GB IT LI LU NL SE

(56) Entgegenhaltungen:
EP-A- 0 167 704
AT-A- 343 150
DE-B- 2 725 267
FR-A- 2 321 442
GB-A- 1 160 642
US-A- 3 379 320

(73) Patentinhaber: Dr. Liebe-Herzing Graphische
Maschinen KG
Margaretenstrasse 98
A-1050 Wien (AT)

(72) Erfinder: LIEBE-HERZING, Fritz
Margaretenstrasse 98
A-1050 Wien (AT)

(74) Vertreter: Holzer, Walter, Dipl.-Ing. et al
Patentanwälte, Dipl.-Ing. Dr.techn. Schütz
Alfred, Dipl.-Ing. Holzer Walter Dipl.-Ing.
Pfeifer Otto Fleischmanngasse 9
A-1040 Wien (AT)

## Beschreibung

Die Erfindung betrifft eine Vorrichtung zum Stapeln von gefalzten Druckprodukten im Anschluß an eine Fördereinrichtung, welche die Druckprodukte schuppenförmig gelegt zuführt, mit einer dem abgabeseitigen Ende der Fördereinrichtung zugeordneten horizontalen, in Förderrichtung hinund herbewegbaren Gabel zur Aufnahme der Druckprodukte, einer unterhalb der ersten Gabel in vertikaler Richtung auf- und abbewegbaren Einrichtung zur Aufnahme der bei der Bewegung der Gabel entgegen der Förderrichtung auf diese Einrichtung fallenden Druckprodukte und zum Absenken des gebildeten Druckproduktstapels auf eine Aufnahmeeinrichtung, der eine Einrichtung zum abwechselnden Verdrehen aufeinanderfolgender Druckproduktstapel und eine Einrichtung zum Sammeln der Stapel in Kreuzlage nachgeschaltet sind.

Eine Stapelvorrichtung dieser Art ist z.B. aus der EP-A-167704 bekannt. Bei der bekannten Vorrichtung ist die Aufnahmeeinrichtung durch ein Förderband gebildet und es sind die Einrichtung zum abwechselnden Verdrehen aufeinanderfolgender Druckproduktstapel und die Einrichtung zum Sammeln der Stapel in Kreuzlage jeweils durch Hebetische gebildet, die in mechanischer Hinsicht aufwendige und damit störanfällige Konstruktion haben. Die bekannte Vorrichtung hat außerdem einen relativ langsamen Arbeitstakt, weil die einzelnen Druckproduktstapel der Verdreheinrichtung mittels des Förderbandes jeweils nacheinander zugeführt werden.

Die Erfindung zielt darauf ab, eine Vorrichtung der einleitend angegebenen Art zu schaffen, die es bei konstruktiv einfacher Ausgestaltung in Druckgeschwindigkeit ermöglicht, Stapel von Druckprodukten in Kreuzlage zu bilden. Diese Aufgabe wird erfindungsgemäß dadurch gelöst, daß : die unterhalb der ester Gabel angeordnete aufnahmeeinrichtung durch eine in vertikaler Richtung bewegbare zweite Gabel gebildet ist, daß auf der durch einen Tisch gebildeten Aufnahmeeinrichtung ein quer zur Förderrichtung bewegbarer Schieber zum abwechselnden Verschieben der aufeinanderfolgenden Druckproduktstapel quer zur Förderrichtung nach rechts oder links angeordnet ist, daß zwei den seitlichen Bewegungs-endpunkten der Druckproduktstapel zugeordnete, parallel zur Förderrichtung bewegbare Schieber zum Überschieben jedes der Druckproduktstapel in den Bereich eines zugeordneten, um eine Vertikalachse schwenkbaren Armes vorgesehen sind, mit welchen die Stapel abwechselnd um 90° in eine Lage schwenkbar sind, in der aufeinanderfolgende Stapel um 180° gegeneinander verdreht sind, und daß zum Sammeln einer vorbestimmten Anzahl von Druckproduktstapeln in Kreuzlage eine dem Endpunkt der Schwenkarmbewegung zugeordnete, höhenbewegliche und in der Förderrichtung hin- und herbewegbare dritte Gabel vorgesehen ist, die zum zyklischen Hochheben des bzw. der auf der dritten Gabel befindlichen Stapel(s) während der Schwenkarmbewegung, Absenken des bzw. der Stapel(s) auf den jeweils zugeführten Stapel, Zurückziehen und Absenken der Gabel und Untergreifen des neuen Kreuzstapels sowie zum Überführen des Kreuzstapels auf eine nachgeschaltete Fördereinrichtung dient.

Auf diese Weise wird mit relativ geringem Konstruktions- und Raumaufwand ein einwandfreies Kreuzstapeln der Druckprodukte mit hohem Durchsatz gewährleistet. Die erfindungsgemäße Vorrichtung kann deshalb einer Druckeinrichtung problemlos unmittelbar nachgeschaltet werden, weil ihre Arbeitsgeschwindigkeit mit der Druckgeschwindigkeit kompatibel ist

Die Erfindung wird nachfolgend an einem Ausführungsbeispiel unter Bezugnahme auf die Zeichnung näher erläutert, in der

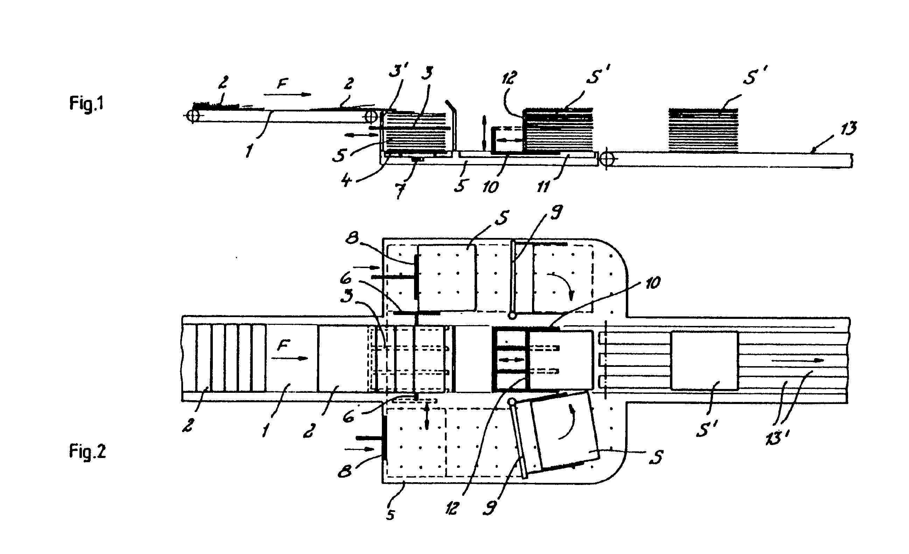

Fig. 1 eine schematische Seitenansicht der Vorrichtung gemäß der Erfindung und

Fig. 2 eine schematische Draufsicht auf die Vorrichtung zeigt.

Von einem Förderband 1, das z.B. einem Apparat zum Beschneiden der Kanten von gefalzten Druckprodukten nachgeschaltet ist, werden die Druckprodukte in Form von mit gegenseitigem Abst and angeordneten Schuppenteilströmen 2 zugeführt. Dem Förderband 1 ist am unteren Ende eine in Förderrichtung (Pfeil F) hin- und herbewegbare horizontale Gabel 3 nachgeschaltet, die mit Hilfe eines feststehenden Anschlages vom Förderband 1 die Druckprodukte eines Schuppenteilstromes, z.B. 50 Druckprodukte, übernehmen kann. Unterhalb der Gabel 3 ist ein seitlich offener Auffangkorb mit einer dessen Boden bildenden Gabel 4 vorgesehen, die in vertikaler Richtung auf- und abbewegbar ist und in der abgesenkten Lage in Ausnehmungen eines Luftkissentisches 5 eingreift. Die Gabel 3 nimmt Druckprodukte so lange auf, bis die Gabel 4 in ihrer angehobenen Stellung unmittelbar unterhalb der Gabel 3 angelangt ist. Bei einer Bewegung der Gabel 3 entgegen der Förderrichtung F fallen die von einem vertikalen Gitter 3' zurückgehaltenen Druckprodukte auf die darunterliegende Gabel 4, welche den auf ihr gebildeten Stapel S auf den Luftkissentisch 5 absenkt, während die Gabel 3 sofort in die Auffangstellung zurückkehrt. Der Stapel S wird mittels eines Schiebers 6 um etwas mehr als eine Produktbreite quer zur Förderrichtung F nach rechts oder links verschoben. Der Schieber 6 gleitet in Ausnehmungen 7 im Luftkissentisch 5 und wartet in der jeweiligen Endstellung, bis ein neuer Stapel abgesenkt worden ist.

In der seitlichen Endstellung jedes Stapels S wird dieser mit Hilfe eines zugeordneten, in Förderrichtung bewegbaren Schiebers 8 auf dem Luftkissentisch 5 parallel zur Förderrichtung F jeweils um etwas mehr als die doppelte Produktlänge vorwärts in den Bereich eines in vertikaler Richtung heb- und senkbaren oder hochschwenkbaren Armes 9 geschoben, der um eine Vertikalachse um 90° schwenkbar ist. Der Arm greift am Stapel S an, um diesen um einen Winkel von 90° in die Förderrichtung F zurück auf eine weitere, in vertikaler Richtung heb- und senkbare sowie in Förderrichtung hin- und herbewegbare horizontale Gabel 10 zu verschwenken. Die Gabel 10 greift in Ausnehmungen 11 in der Oberfläche des Tisches 5 ein. Nach dem Anheben des vom Schwenkarm 9 zugeführten Stapels S um eine vorbestimmte Höhe und Zuführen eines weiteren Stapels S mittels des gegenüberliegenden Schwenkarmes wird die Gabel 10 zurückgezogen, so daß der obere Stapel, der gegen ein die Hinterseite des Stapels abstützendes, von der Gabel 10 durchsetztes Gitter 12 od.dgl. anliegt, auf den unteren. Stapel absinkt. Die beiden Stapel liegen nun kreuzförmig, d.h. um 180° zueinander verdreht, übereinander. Die Gabel 10 schiebt in der abgesenkten Stellung, sobald eine bestimmte Anzahl von Stapeln S in Kreuzlage übereinander gestapelt sind, den gebildeten Kreuzstapel S′ auf ein in Förderrichtung F nachgeschaltetes Förderband 13, das aus einzelnen parallelen Bändern 13′ besteht, so daß die Gabelzinken in das Förderband 13 einfahren können und der Kreuzstapel S′ von ihm zum Abtransport übernommen werden.

Der Arbeitsablauf der Vorrichtung wird durch eine nicht gezeigte Steuereinrichtung programmgesteuert und läuft vollautomatisch ab. Im Bereich des Förderbandes 1 wird mit Hilfe einer ebenfalls nicht gezeigten Einrichtung bewirkt, daß jeweils eine vorbestimmte Anzahl von Druckprodukten in Teilschuppenströme zusammengeschoben wird, was zur Folge hat, daß zwischen den einzelnen zusammengeschobenen Druckproduktgruppen am Förderband Abstände vorhanden sind. Die Bewegungen der Gabel 3, des Schiebers 6, der Schieber 8, der Schwenkarme 9 und der Gabel 10 werden durch eine entsprechende Zeitsteuerung aufeinander abgestimmt.

Das gezeigte Ausführungsbeispiel kann im Rahmen der Erfindung hinsichtlich der konstruktiven Einzelheiten verschiedentlich abgewandelt werden.

**Ansprüche**

1. Vorrichtung zum Stapeln von gefalzten Druckprodukten im Anschluß an eine Fördereinrichtung, welche die Druckprodukte schuppenförmig gelegt zuführt, mit einer dem abgabeseitigen Ende der Fördereinrichtung zugeordneten horizontalen, in Förderrichtung hin- und herbewegbaren ersten Gabel (3) zur Aufnahme der Druckprodukte, einer unterhalb der ersten Gabel in vertikaler Richtung auf- und abbewegbaren Einrichtung (4) zur Aufnahme der bei der Bewegung der Gabel entgegen der Förderrichtung auf diese Einrichtung fallenden Druckprodukte und zum Absenken des gebildeten Druckproduktstapels auf eine Aufnahmeeinrichtung (5), der eine Einrichtung zum abwechselnden Verdrehen aufeinanderfolgender Druckproduktstapel, und eine Einrichtung zum Sammeln der Stapel in Kreuzlage nachgeschaltet sind, dadurch gekennzeichnet, daß die unterhalb der ersten Gabel (3) angeordnete Aufnahmeeinrichtung durch eine in vertikaler Richtung bewegbare zweite Gabel (4) gebildet ist : siehe nächste Seite, daß auf der durch einen Tisch (5) gibeldeten Aufnahmeeinrichtung ein quer zur Förderrichtung (F) bewegbarer Schieber (6) zum abwechselnden Verschieben der aufeinanderfolgenden Druckproduktstapel quer zur Förderrichtung nach rechts oder links angeordnet ist, daß zwei den seitlichen Bewegungsendpunkten der Druckproduktstapel zugeordnete, parallel zur Förderrichtung (F) bewegbare Schieber (8) zum Überschieben jedes der Druckproduktstapel in den Bereich eines zugeordneten, um eine Vertikalachse schwenkbaren Armes (9) vorgesehen sind, mit welchem die Stapel abwechselnd um 90° in eine Lage schwenkbar sind, in der aufeinanderfolgende Stapel um 180° gegeneinander verdreht sind, und daß zum Sammeln einer vorbestimmten Anzahl von Druckproduktstapeln in Kreuzlage eine dem Endpunkt der Schwenkarmbewegung zugeordnete, höhenbewegliche und in der Förderrichtung (F) hin- und herbewegbare dritte Gabel (10) vorgesehen ist, die zum zyklischen Hochheben des bzw. der auf der dritten Gabel (10) befindlichen Stapel(s) während der Schwenkarmbewegung, Absenken des bzw. der Stapel(s) auf den jeweils zugeführten Stapel, Zurückziehen und Absenken der Gabel und Untergreifen des neuen Kreuzstapels sowie zum Überführen des Kreuzstapels (S′) auf eine nachgeschaltete Fördereinrichtung (13) dient.

2. Vorrichtung nach Anspruch 1, dadurch gekennzeichnet, daß die zweite Gabel (4) in Ausnehmungen des Aufnahmetisches (5) absenkbar ist.

3. Vorrichtung nach Anspruch 1 oder 2, dadurch gekennzeichnet, daß die Fördereinrichtung (13), welche der zum Sammeln der Druckproduktstapel dienenden dritten Gabel (10) nachgeschaltet ist, aus einzelnen parallelen Bändern (13′) besteht, zwischen welche die Gabelzinken einfahren.

4. Vorrichtung nach einem der Ansprüche 1 bis 3, dadurch gekennzeichnet, daß im Aufnahmetisch (5) in Förderrichtung (F) verlaufende Ausnehmungen (11) zur Aufnahme der zum Sammeln der Druckproduktstapel dienenden dritten Gabel (10) ausgebildet sind.

**Claims**

1. Apparatus for the stacking of folded printed products following a conveying device, which feeds the printed products laid in an imbricated formation, having a horizontal first fork (3), which is assigned to the delivery end of the conveying device, can move back and forth in the conveying direction and is for receiving the printed products, a device (4), which can move up and down in a vertical direction underneath the first fork, is for receiving the printed products dropping onto it upon movement of the fork against the conveying direction and is for lowering the stack of printed products formed onto a receiving device (5) which has downstream of it a device for the alternate turning of successive stacks of printed products and a device for collecting the stacks in criss-cross position, characterised in that the receiving device arranged underneath the first fork (3) is formed by a second fork (4), which can move in the vertical direction, in that on top of the receiving device, formed by a table (5), there is arranged a slide (6), which can move transversely to the conveying direction (F), for the alternate displacing of the successive stacks of printed products transversely to the conveying direction to the right or left, in that two slides (8) are provided, which are assigned to the lateral end-of-movement points of the stacks of printed products, can move parallel to the conveying direction (F) and are for shifting each of the stacks of printed products into the area of an assigned arm (9), which can swivel about a vertical axis and with which the stacks can be swivelled alternately by 90° into a position in which successive stacks are turned by 180° with respect to one another, and in that, for collecting a predetermined number of stacks of printed products in criss-cross position, a third fork (10) is provided, which is assigned to the end point of the swivel arm movement, is vertically movable and can move back and forth in the conveying direction (F) and serves for the cyclical raising of the stack(s) located on the third fork (10) during the swivel arm movement, lowering of the stack(s) onto the respectively assigned stack, retracting and lowering of the fork and engaging underneath the new criss-cross stack as well as for transferring the criss-cross stack (s') onto a downstream conveying device (13).

2. Apparatus according to Claim 1, characterised in that the second fork (4) can be lowered into recesses of the receiving table (5).

3. Apparatus according to Claim 1 or 2, characterised in that the conveying device (13), which is arranged downstream of the third fork (10), which serves for collecting the stacks of printed products, consists of individual parallel bands (13'), between which the fork prongs enter.

4. Apparatus according to one of Claims 1 to 3, characterised in that recesses (11), running in the conveying direction (F), are formed in the receiving table (5) for receiving the third fork (10), which recesses serve for the collecting of the stacks of printed products.

ducts.

**Revendications**

1. Dispositif pour empiler des produits imprimés pliés faisant suite à un transporteur qui amène les produits imprimés sous une forme imbriquée à plat, comportant une première fourche (3) horizontale associée à l'extrémité de déchargement du transporteur et pouvant se déplacer en un mouvement de va-et-vient dans le sens du transport en vue de recevoir les produits imprimés, un dispositif (4) pouvant se déplacer verticalement vers le haut et vers le bas en dessous de la première fourche, afin de recevoir les produits imprimés tombant sur ce dispositif lors du déplacement de la fourche dans un sens opposé au transport et afin d'abaisser la pile de produits imprimés ainsi formée sur un dispositif de réception (5), en aval duquel sont installés un dispositif servant à faire pivoter les piles de produits imprimés successives alternativement et un dispositif servant à rassembler les piles avec croisement, caractérisé en ce qu'un dispositif de réception disposé en dessous de la première fourche (3) est constitué par une deuxième fourche (4) mobile verticalement, que, sur le dispositif de réception formé par une table (5) est disposé un coulisseau (6) mobile perpendiculairement par rapport au sens du transport (F) et servant au déplacement des piles de produits imprimés successives, perpendiculairement par rapport au sens de transport, alternativement vers la gauche et vers la droite, que deux coulisseaux (8) associés aux points d'extrémité des déplacements latéraux des piles de produits imprimés et mobiles parallèlement au sens de transport (F) sont prévus pour faire glisser chacune des piles de produits imprimés dans la zone d'un bras (9) associé pivotant autour d'un axe vertical, à l'intervention duquel les piles peuvent pivoter alternativement de 90° dans une position dans laquelle les piles successives sont tournées de 180° l'une par rapport à l'autre et que, pour rassembler un nombre prédéterminé de piles de produits imprimés à croisement, une troisième fourche (10) associée au point d'extrémité du déplacement du bras pivotant, mobile en hauteur et pouvant se déplacer en un mouvement de va-et-vient dans le sens du transport (F), est prévue, cette fourche étant destinée cycliquement à élever la ou les piles se trouvant sur ses fourchons, pendant le déplacement du bras pivotant, à abaisser la ou les piles sur les piles déjà présentes, à se rétracter, à descendre et à s'engager en dessous de la nouvelle pile à croisement (S') en vue de la transférer sur un transporteur (13) placé en aval.

2. Dispositif suivant la revendication 1, caractérisé en ce que la deuxième fourche (4) peut être abaissée dans des évidements prévus dans la table de réception (5).

3. Dispositif suivant la revendication 1 ou 2, caractérisé en ce que le transporteur (13), placé en aval de la troisième fourche (10) servant à rassembler les piles de produits imprimés, est constitué de quelques bandes parallèles (13') entre lesquelles s'insèrent les fourchons des fourches.

4. Dispositif suivant l'une quelconque des revendications 1 à 3, caractérisé en ce que dans la table de réception (5) sont prévus des évidements (11), s'étendant dans le sens du transport (F), destinés à recevoir la troisième fourche (10) servant à rassembler les piles de produits imprimés.

Fig.1

Fig.2